# EUROPEAN PATENT SPECIFICATION

(11) **EP 0 649 213 B1**
(45) Date of publication and mention of the grant of the patent: **11.12.1996**
(21) Application number: 94116199.4
(22) Date of filing: 13.10.1994
(51) Int. Cl.: H02K 13/08, H02K 23/26, H02K 3/12, H02K 3/51

(54) **Electric rotating machine**
Rotierende elektrische Maschine
Machine électrique rotative

(30) Priority: 15.10.1993 JP 258717/93; 15.10.1993 JP 258720/93; 15.10.1993 JP 258731/93; 15.11.1993 JP 284766/93; 21.12.1993 JP 322810/93; 22.12.1993 JP 323877/93; 31.05.1994 JP 117993/94; 14.09.1994 JP 219717/94
(43) Date of publication of application: 19.04.1995
(60) Divisional application: 96107285.7
(73) Proprietor: NIPPONDENSO CO., LTD., Kariya-city Aichi-pref., 448 (JP)
(72) Inventor: Shiga, Tsutomu, Kouda-cho, Nukata-gun, Aichi-pref. (JP); Hayashi, Nobuyuki, Nagoya-city, Aichi-pref. (JP); Ohmi, Masanori, Anjo-cho, Anjo-city, Aichi-pref. (JP); Niimi, Masami, Handa-city, Aichi-pref. (JP); Murata, Mitsuhiro, Anjo-city, Aichi-pref. (JP)
(74) Representative: KUHNEN, WACKER & PARTNER

(56) References cited:
- EP-A- 0 288 328
- EP-A- 0 387 666
- DE-A- 2 127 556
- DE-A- 3 813 317
- FR-A- 2 534 085
- US-A- 4 591 750

## Description

The present invention relates to an electric rotating machine according to the preamble of claim 1.

An electric rotating machine of that type is known from FR-A-2 534 085. This known machine comprises an armature core which includes a plurality of recesses and a shaft for rotatably supporting the armature core. Each of these recesses houses an outer coil trunk and an inner coil trunk, wherein each of the inner coil trunks, on both end end parts thereof, comprises an inner coil arm which is disposed substantially perpendicularly to the shaft so as to extend towards the shaft. In a similar way, each of the outer coil trunks, on both end end parts thereof, comprises an outer coil arm which is disposed substantially perpendicularly to the shaft so as to extend towards the shaft. In order to complete the winding, the respective outer coil arm is connected, at the other end part thereof, to the other end part of an inner coil arm disposed in another one of the recesses.

In this known machine, the recesses in the armature core are throughholes, the inner coil trunk being a flexible doublewire which is fed through a corresponding hole and subsequently bent so as to form the inner coil arms, whereas the outer coil trunk is a single wire at the ends of which a respective blade is attached by inserting a pin of the wire into a corresponding hole of the blade. The blade, which is reinforced by a resin is the outer coil arm and forms the commutator of the machine.

A disadvantage of this known machine, therefore, has to be seen in that the fabrication of the winding is comparatively difficult so that the costs are correspondingly increased. Furtheron, the connection between the blade and the outer coil arm is subjected to great centrifugal forces and, thus, is likely to break if the speed of the motor exceeds a certain value.

In EP-A-0 387 666, there is disclosed an armature of an electric rotating machine the winding of which is formed by a single one continuous flexible wire which, after being wound over the core, is completely moulded with resin. Therefore, this known armature cannot be compared to the winding structure as claimed in the preamble of claim 1. In DE-A-3 813 317, there is disclosed some sort of winding units, the shape of the end away from the commutator, however, not being defined, i.e. whether it is formed as a loop or as two separate pieces.

It is the object of the present invention to provide an electric rotating machine according to the preamble of claim 1 which can be fabricated at low costs and which is able to run at a very high speed.

This object, according to the invention, is solved by the advantageous features indicated in the characterizing part of claim 1.

These features, on the one hand, provide a winding which can be fabricated with some few and easy production steps and, thus, is very cost effective. On the other hand, the winding structure formed thereby is very rigid and does not comprise any weak connection at the outer periphery part thereof; therefore, rather high speeds can be reached without risking a break of the winding.

Further advantageous developments of the present invention are the subject-matter of the subclaims.

Other objects, features and characteristics of the present invention, as well as the functions of the related parts, will be appreciated from the following detailed description and the drawings, all of which from a part of this application. In the drawings:
Fig. 1 is an axial cross-sectional view illustrating an electric rotating machine according to a first embodiment of the present invention;
Fig. 2 is an axial cross-sectional view illustrating a rotor of the electric rotating machine of the first embodiment;
Fig. 3 is a plan view illustrating an armature core of the electric rotating machine of the first embodiment;
Fig. 4 is a plan view, partly in cross section, illustrating a part of an armature coil of the electric rotating machine of the first embodiment;
Fig. 5 is a plan view illustrating a coil arm of the electric rotating machine of the first embodiment;
Fig. 6 is a perspective outline view illustrating the layout of outer and inner coil trunks of the electric rotating machine of the first embodiment;
Fig. 7 is a cross-sectional view illustrating the outer and inner coil trunks housed within the slots;
Fig. 8 is a plan view illustrating the armature of the first embodiment;
Fig. 9 is a plan view illustrating an insulating spacer of the first embodiment;
Fig. 10 is a cross-sectional view illustrating a fixing member of the first embodiment;
Fig. 11 is a cross-sectional view illustrating an insulating cap of the first embodiment;
Fig. 12 is a typical view illustrating the winding of the armature coil of the first embodiment;
Figs. 13A through 13C are perspective views illustrating the production procedure for the armature coil;
Figs. 14A through 14D are perspective views illustrating the production procedure for another armature coil;
Fig. 15 is a cross-sectional view illustrating the positional relation between the outer coil arm and the metal brush;
Fig. 16 is a cross-sectional view illustrating another connecting method for the outer and inner coil arms;
Fig. 17 is a cross-sectional view illustrating still another connecting method for the outer and inner coil arms;
Fig. 18 is a cross-sectional view illustrating still another connecting method for the outer and inner coil arms;
Fig. 19 is an axial cross-sectional view illustrating the rotor of the electric rotating machine according to a second embodiment of the present invention;
Fig. 20 is an axial cross-sectional view illustrating the rotor of the electric rotating machine according to a third embodiment of the present invention;
Fig. 21 is an axial cross-sectional view illustrating the rotor of the electric rotating machine according to a fourth embodiment of the present invention;
Fig. 22 is an axial cross-sectional view illustrating the rotor of the electric rotating machine according to a fifth embodiment of the present invention;
Fig. 23 is an axial cross-sectional view illustrating the rotor of the electric rotating machine according to a sixth embodiment of the present invention;
Fig. 24 is an axial cross-sectional view illustrating a seventh embodiment of this invention;
Fig. 25A is an enlarged plan view of a part of the seventh embodiment;
Fig. 25B is a side view of the axial side end of the armature coil on the commutator side of seventh embodiment in Fig. 24;
Fig. 26 is a partial wiring diagram of an inner conductor and an outer conductor shown in Fig. 24;
Fig. 27 is an enlarged axial cross-sectional view of the seventh embodiment shown in Fig. 24;
Fig. 28A through 28C show an eighth embodiment in which Fig. 28A is an axial cross-sectional view illustrating the state before armature coil holding portions are welded. Fig. 28B is an axial front view, and Fig. 28C is a main enlarged plan view illustrating the shape of a protrusion portion;
Fig. 29A is an axial-cross sectional view illustrating the state after the armature coil holding portions are welded in the eighth embodiment, Fig. 29B is an axial front view of the same, and Fig. 29C is an enlarged plan view illustrating the protrusion portion; and
Fig. 30 is a partial enlarged axial cross-sectional view illustrating the fixed state of the collar.

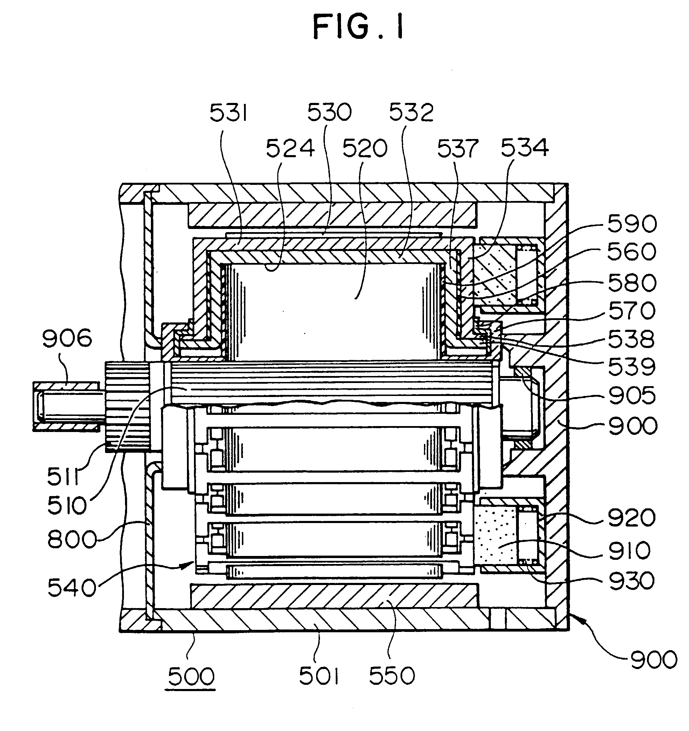

The first embodiment of the electric rotating machine according to the present invention will be described with reference to Figs. 1 through 11.

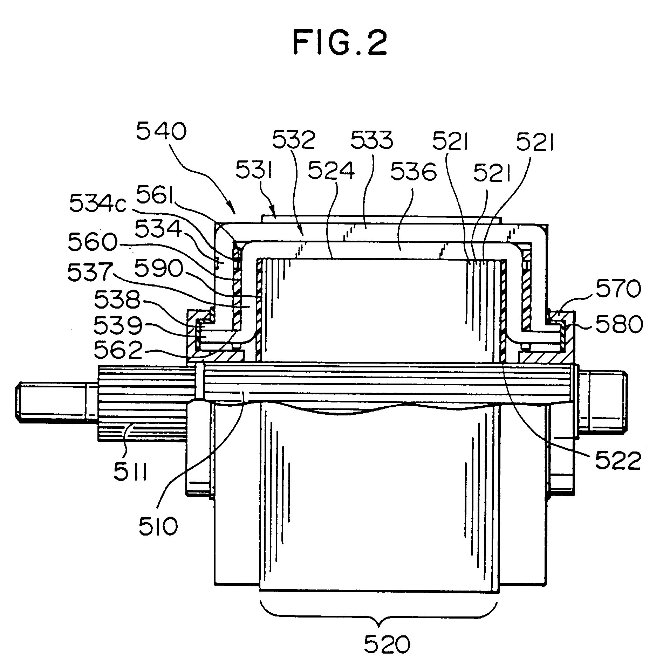

As illustrated in Figs. 1 and 2, an electric rotating machine 500 includes a shaft 510, an armature including an armature core 520 rotatably and integrally fixed on the shaft 510 and an armature coil 530, and fixed magnetic poles 550 for rotating the armature. The magnetic poles 550 are fixed on the inner periphery of a yoke 501.

The shaft 510 is rotatably held by a metal bearing 906 provided in a supporting member (not illustrated) and a metal bearing 905 fixed on the inner periphery of an end frame 900. At the front end of the shaft 510 a gear 511 is formed which is engaging with a gear of a planetary gear mechanism (not illustrated).

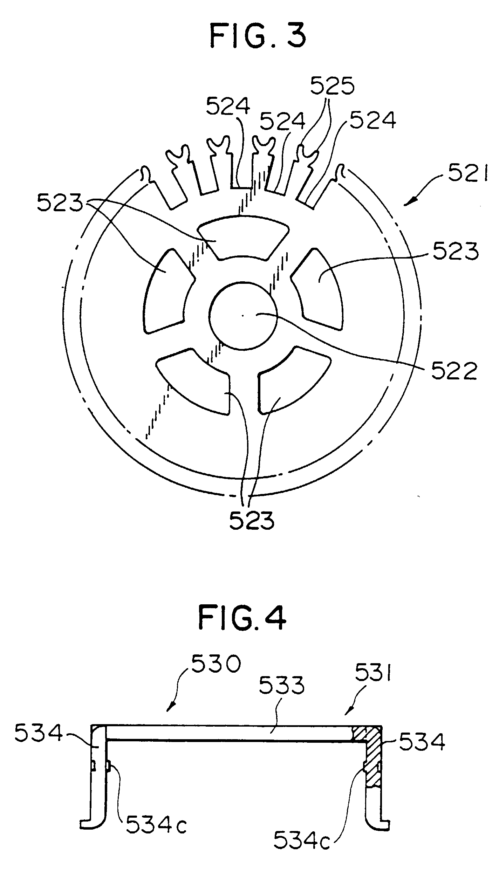

The armature core 520 is formed by stacking a multiplicity of ring-shaped core plates 521, as illustrated in Figs. 2 and 3, and the shaft 510 is force or press fit into a hole 522 made in the center of plates 521. Each core plate 521 is punched out of a thin steel plate on a press, and insulated on the surface. On the inside diameter side of the core plate 521 (around the hole 522) a plurality of punched holes 523 are formed, which reduce the weight of the core plate 521. On the outer periphery of the core plate 521, a plurality of axially extending (e.g., 25) slots 524 are formed to house the armature coil 530. On the outer periphery of the core plate 521 and between the respective slots 524 adjacent to each other set claws 525 are formed for holding the armature coil 530 housed within slot 524 in position. The claws 525 will be described in more detail later.

The armature coil 530 in this embodiment adopts a double-layer coil which comprises a plurality of (e.g., 25) outer coil bars 531 composing an outer armature coil and the same number of inner coil bars 532 composing an inner armature coil, wherein the outer coil bar 531 and the inner coil bar 532 are mutually stacked in the radial direction. Each outer coil bar 531 is combined with each inner upper coil bar 532 and each end part of each outer coil bar 531 is electrically connected to the end part of each inner coil bar 532 so as to form a loop coil.

The outer coil 531 made of a highly conductive metal (e.g., copper) extends parallel to the fixed magnetic pole 550. The outer coil bar 531 includes an outer coil trunk 533 held within the slot 524 and a pair of outer coil arms 534 extending from the respective ends of the outer coil trunk 533 turning inwards therefrom to be perpendicular to the axial direction of the shaft 510 and roughly parallel to both axial side faces 522 of the armature core 520. Here, both ends of the outer coil trunk 533 are joined to recessed parts 534a formed at one end of the respective pair of the outer coil arms 534.

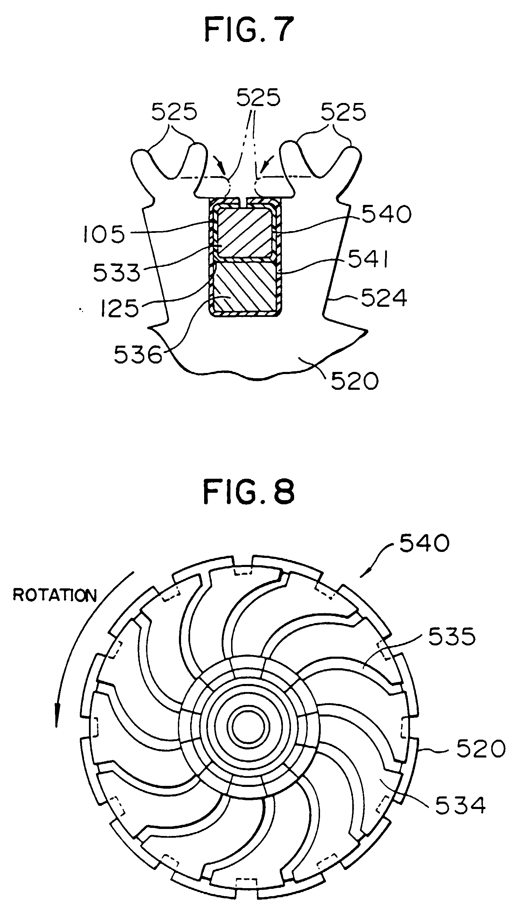

The outer coil trunk 533 is a linear bar with rectangular cross section as illustrated in Figs. 4 through 7. The periphery of the outer trunk 533 is covered with an outer insulating film 540 (e.g., a thin resin film, such as nylon, or paper). The outer coil trunk 533 covered with the outer insulating film 540 is firmly held within the slot 524 together with an inner coil trunk 536 (described later) as illustrated in Fig. 7.

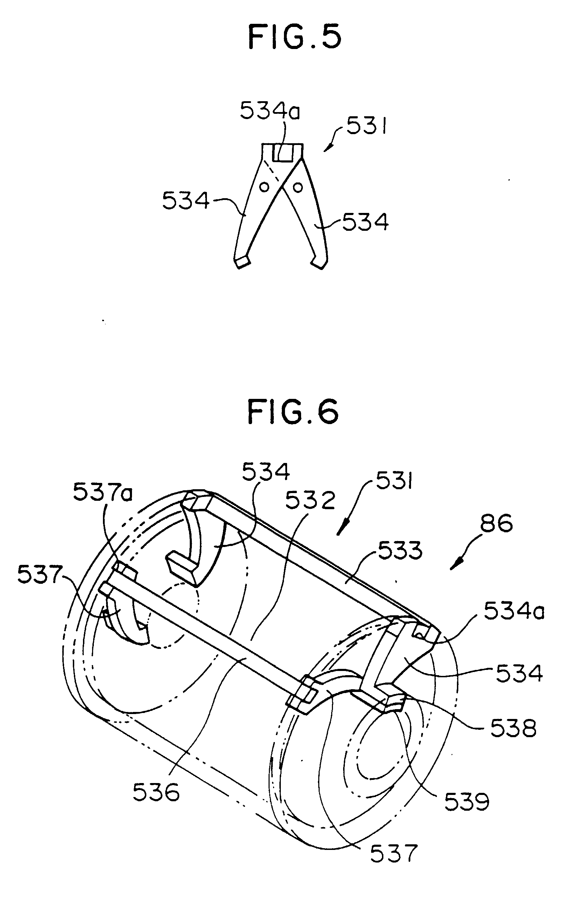

As illustrated in Fig. 6, one of the pair of outer coil arms 534 is inclined to the forward side in the rotating direction of the armature, and the other outer coil arm 534 is inclined to the backward side in the rotating direction. The two outer coil arms 534 are inclined to the radial direction at the same angle to the outer coil trunk 533 and formed in the same shape. Accordingly, even if the outer coil arms 534 are horizontally turned 180° around the center of the outer coil bar 531, the outer coil bar 531 takes the same shape as if the outer coil arms 534 were not turned. That is, as there is no difference in shape between the pair of outer coil arms 534, the process of assembling the outer coil bars 531 to the armature coil 520 has a high efficiency.

Of the pair of outer coil arms 534, one located at the side of the end frame 900 directly contacts, as commutator, a metal brush 910 (described later) to electrically energize the armature coil 530. For this purpose, at least the surfaces of the outer coil arms 534 which are in contact with the brush 910 are smooth. The electric rotating machine of this embodiment does not require any separate commutator for electrically energizing the armature coil 530. As a result, as there is no need to provide any separate commutator, the number of necessary components can be reduced. In addition, as there is no need to provide any separate commutator within the yoke 501, the structure of the electric rotating machine can be downsized in the axial direction.

Moreover, as the outer coil arm 534 directly contacts the metal brush 910, the heat generated by the sliding contact between the outer coil arm 534 and the metal brush 910 is transmitted from the outer coil arm 534 to the outer coil trunk 533, the armature core 520, the shaft 510, etc. As the armature coil 530, the armature core 520, the shaft 510, etc. are considerably larger in heat capacity compared with conventional, separately provided commutators, the sliding contact portion between the outer coil arm 534 and the metal brush 910 can be maintained at a low temperature.

As illustrated in Fig. 8, each outer coil arm 534 gradually expands in the radial direction towards the distal end, and the peripheral clearance between mutually adjacent outer coil arms 534 is almost uniform from the inner periphery thereof to the outer periphery thereof. This arrangement substantially enlarges the contact area between the metal brush 910 and the outer coil arm 534. As a result, the heat of the metal brush 910 is easily transmitted to the coil bars 531, whereby the temperature of the metal brush 910 can be maintained at a substantially low level. It is to be noted that Fig. 8 is depicted to illustrate the shape of the outer coil arm 534 for easy understanding, and the number of the outer coil arms 534 does not match with the number of the slots 524 illustrated in Fig. 3.

Furthermore, the clearance groove (space groove) between mutually adjacent outer coil arms 534 in contact with the metal brush 910 is shaped into a rough spiral developing backwards in the rotating direction towards the outer periphery thereof as illustrated in Fig. 8. By shaping these clearance grooves 535 into a rough spiral in this way, the metal brush 910 contacts the outer coil arm 534 serially from the inside thereof where wind velocity is low, to the outside thereof where wind velocity is high. As a result, the metal brush 910 has a sliding contact with the outer coil arm 534 and can be prevented from jumping on the outer coil arm 534.

In addition, owing to the clearance groove 535 provided between mutually adjacent outer coil arms 534, when the armature coil 530 rotates, centrifugal wind produced by the clearance grooves 535 between mutually adjacent outer coil arms 534 flows from the inside to the outside. The centrifugal wind produced by the rotation of the clearance groove 535 between mutually adjacent outer coil arms 534 in contact with the metal brush 910 is used to cool the heat generated by the sliding contact between the metal brush 910 and the outer coil arms 534 and blow off the metal brush wear powder to the outside radially (described later).

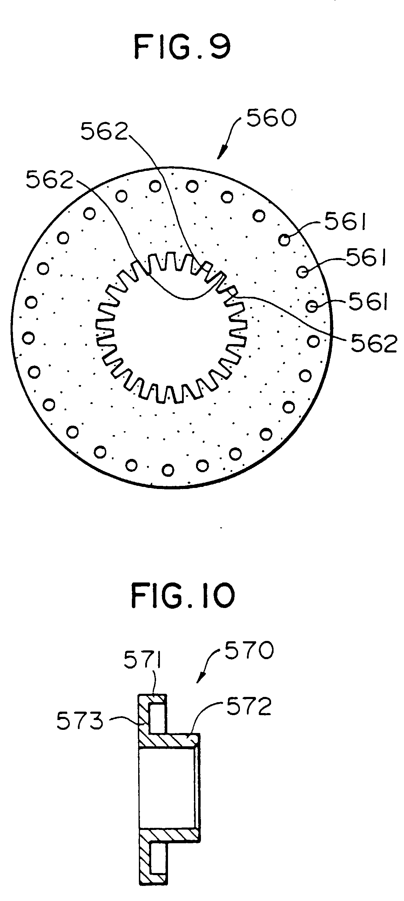

The pair of outer coil arms 534 have small projections 534c protruding inwards in the axial direction on the inner surfaces of the outer coil arms 534, with projections 534c facing each other as illustrated in Fig. 4. Projection 534c is disposed between the outer coil arm 534 and the inner coil arm 537 (described later) and fits into a hole (positioning part) 561 formed in an insulating spacer (insulator) 560, as shown in Fig. 9, that insulates the outer coil arm 534 from the inner coil arm 537.

The inner coil bar 532 (coil unit) composing the inner armature coil is made of the same highly conductive material (e.g., copper) as the outer coil bar 531 (coil unit), and extends parallel to the fixed magnetic pole 550. The inner coil bar 532 includes the inner coil trunk 536 held within the slot 524 and a pair of inner coil arms 537 extending from both the respective ends of the inner coil trunk 536 turning inwards therefrom to be perpendicular to the axial direction of the shaft 510. Both ends of the inner coil trunk 536 are inserted into recessed parts 537a formed at one end of the respective pair of the inner coil arms 537 and joined thereto.

The outer coil arms 534 are insulated from the inner coil arms 537 by the insulating spacer 560. the inner coil arms 537 are insulated from the armature core 520 by an insulating ring 590 made of resin (e.g., nylon or phenolic resin.)

The inner coil trunk 536 is a linear bar with rectangular cross section as illustrated in Figs. 4 through 7. The periphery of the inner coil trunk 536 is covered with an inner insulating film 541 (e.g., nylon or paper). The inner coil trunk 536 covered with the insulating film 541 is firmly held within the slot 524 together with the outer coil trunk 533 covered with the outer insulating film 540 as illustrated in Fig. 7.

Of the pair of inner coil arms 537, one located at the side of the gear 511 is inclined in the reverse direction to the inclination direction of the outer coil arm 534. The other inner coil arm 537 located at the rear side is also disposed so as to be inclined in the reverse direction to the inclination direction of the outer coil arm 534. The pair of inner coil arms 537 are inclined to the radial direction at the same angle to the inner coil trunk 536 and formed in the same shape. Accordingly, as is the case with the outer coil bar 531, even if the inner coil arms 537 are horizontally turned 180° around the center of the inner coil bar 532, the inner coil bar 532 takes the same shape as if the inner coil arms 537 were not turned. That is, as there is no difference in shape between the pair of inner coil arms 537, the assembly of the inner coil bars 532 to the armature coil 520 has a high efficiency.

At the inner peripheral end parts of each of the pair of inner coil arms 537 lower inner extension portions 539 are provided extending in the axial direction. The outer periphery of the lower inner extension portion 539 is fit in holes 561 formed in the outer peripheral portion of the insulating spacer 560. The outer periphery of the lower inner extension portion 539 is laid on the inner periphery of the upper inner extension portion (protruded portion) 538 formed at the end of the outer coil arm 524 and electrically and mechanically connected thereto by a joining technique, such as welding. Here, the inner periphery of the lower inner extension portion (protruded portion) 539 is distantly disposed from the shaft 510 for the purpose of insulation.

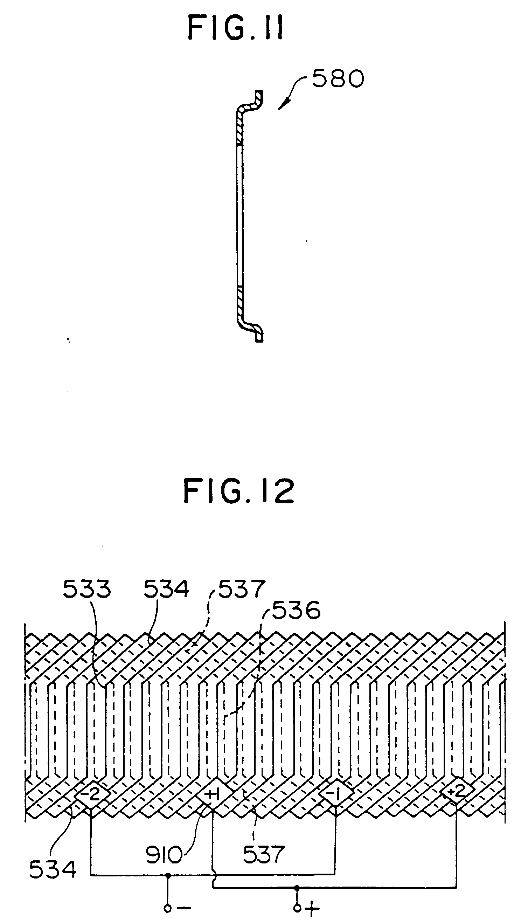

At the inner peripheral end parts of each of the pair of outer coil arms 534 upper inner extension portions 538 are provided extending in the axial direction. The inner periphery of the upper inner extension portion 538 is laid on the outer periphery of the above-described lower inner extension portion 539 formed at the inner end of the inner coil bar 532 and electrically and mechanically connected thereto by a joining technique, such as welding. The outer periphery of the upper inner extension portion 538 contacts, through an insulating cap 580, the inside of an outer peripheral annular part 571 of a fixing member (collar) 570 press fit on the shaft 510 and fixed thereto as shown in Figs. 10 and 11.

The insulating spacer 560 is a thin plate ring made of resin (e.g., epoxy resin, phenolic resin, nylon). In the outer peripheral portion thereof a plurality of holes 561 are provided in which projections 534c of the outer coil arms 534 are fit as illustrated in Fig. 9. On the inner peripheral portion of the insulating spacer 560 recessed parts 562 are provided in which the lower inner extension portions 539 formed on the inside of the inner coil arms 537 are fit. The holes 561 and the recessed parts 562 of the insulating spacer 560 are used to position and fix the armature coil 530. The plurality of holes 561 in which the projections 534c of the outer coil arms 534 are fit have been preformed in the outer peripheral portion of the insulating spacer 560. It is also acceptable that the outer coil arms 534 are stamped from the outer peripheral side thereof to form the projections 534c on the outer coil arms 534 and to simultaneously form holes 561 in the insulating spacer 560 by using projections 534c as stamps. According to this method, the outer coil arms 534 are hardened due to plastic deformation, whereby the wear thereof that may be caused by sliding contact with the metal brush 910 can be reduced.

The fixing member 570 is an iron annular material. As illustrated in Fig. 10, the fixing member 570 comprises an inner peripheral annular part 572 to be press fit on the shaft 510, the regulating ring 573 extending in the axial direction for preventing the outer coil arms 534 and the inner coil arms 537 from unfolding in the axial direction, and the outer peripheral annular part 571 covering the upper inner extension portions 538 of the outer coil arms 534 for preventing the internal diameter of the armature coil 530 from enlarging due to centrifugal force. Here, the fixing member 570 has a disc-like insulating cap 580 made of a resin (e.g., nylon), as illustrated in Fig. 11, between the outer coil arm 534 and the inner coil arm 537 so as to insulate the outer coil arm 534 from the inner coil arm 537.

The fixing member 570 is disposed in front of the starter and contacts the rear side of the front partition wall 800 disposed adjacent to the front of the fixing member 570 so as to serve also as a thrust pad for regulating the forward displacement of the armature 540. On the other hand, the fixing member 570 disposed at the back of the starter contacts, the front side of the end frame 900 being disposed adjacent to the rear side of the fixing member 570 to also serve as a thrust pad for regulating the backward displacement of the armature 540.

Each fixing member 570 fixing the inside end part of the armature 530 serves as a thrust pad for the armature 540 as described above. Thus, there is no need to specially provide any thrust pad for the armature 540. As a result, the number of the parts and components required for a starter motor can be reduced as well as allowing to reduce the number of man-hours needed for assembly.

As a means for positioning and fixing the outer coil bars 531 and the inner coil bars 532 of the armature coil 530 to the armature core 520, slots 524 and fixing claws 525 of the armature core 520, holes 561 and recessed parts 562 of the insulating spacer 560, and fixing members 570 which are press fit on the shaft 510 are utilized.

The slot 524 of the armature core 520 houses an outer coil trunk 533 and an inner coil trunk 536. By bending the fixing claws 525 towards the inside diameter as indicated by the arrows of Fig. 7, the outer coil trunk 533 and the inner coil trunk 536 are so firmly fixed in each slot 524 that the displacement of the outer coil trunk 533 and of the inner coil trunk 536 towards the outer diameter under a centrifugal force applied thereto can be prevented. Here, it should be noted that, as the outer periphery of the outer coil trunk 533 is insulated by two insulating films, i.e., insulating films 541 and 540, sufficient insulation is ensured even when the fixing claws 525 are bent towards the inside diameter so as to encroach thereon.

The recessed parts 562 formed on the inner periphery of the insulating spacer 560 in which the lower inner extension portions 539 of the inner coil arms 537 are fit position the inner coil arms 537. The recessed parts 562 also prevent the displacement of the inner coil arms 537 towards the outside diameter under a centrifugal force applied to the inner coil arms 537.

Holes 561 made in the outer periphery of the insulating spacer 560 in which projections 534a of the outer coil arms 534 are fit position the outer coil arms 534. The holes 561 also prevent the displacement of the outer coil arms 534 towards the outside diameter under a centrifugal force applied to the outer coil arms 534.

Fixing members 570 hold the upper inner extension portion 538 and the lower inner extension portion 539 joined to each other so as to prevent the displacement of the inside diameter portion of the armature coil 530 towards the outside diameter under a centrifugal force applied thereto. Furthermore, the fixing members 570 regulate the displacement of the axial end part of the upper inner extension portion 538 and the lower inner extension portion 539 joined to each other to prevent the elongation of the axial length of the armature coil 530. In order to prevent the elongation of the axial length of the outer coil arms 534 and the inner coil arms 537 when the electric rotating machine as the starter motor is in operation, it is necessary to secure a space within the starter to accommodate such an elongation. In this embodiment, however, as the fixing members 570 prevent the elongation of the axial length of the outer coil arms 534 and the inner coil arms 537, the starter requires no such spare space, whereby the axial length of the starter can be shortened.

The procedure for assembling the armature will now be described in detail.

First, the armature core 520 stacked with the core plates 521 is press fit around the shaft 510. Second, the insulating rings 590 are disposed at both sides of the armature core 520. Third, the inner coil trunks 536 of the inner coil bar 532 are housed within respective slots 524 together with the inner insulating film 541.

Fourth, the insulating spacers 560 are attached to both sides of the inner coil arms 537 of the inner coil bars 532, and the lower inner extension portions 539 are disposed within the recessed parts 562, whereby the positioning of the inner coil bars 532 is completed.

Fifth, the outer coil trunks 533 of the outer coil bar 531 are housed within respective slots 524 together with the outer insulating film 540. In this process, the projections 534c of the outer coil arms 534 are fit the holes 561 of the insulating spacers 560, whereby the positioning of the outer coil bars 531 is completed.

Sixth, the upper inner extension portion 538 of the outer armature coil trunk 533 and the lower inner extension portion 539 of the inner coil trunk 536 are joined to each other by a joining technique, such as welding, to ensure an electrical and a mechanical connection.

Seventh, each fixing claw 525 of the armature coils 520 is bent towards the inner periphery to fix the outer coil trunk 533 and the inner coil trunk 536 within each slot 524. Then, the fixing members 570 are press fit on the shaft 510 from both sides to cover the outer periphery of the upper inner extension portions 538 of the armature coils 530, whereby the displacement of the outer coil arms 534 in the axial direction towards the outer periphery can be prevented.

By using the above procedure, the assembly of the armature is completed.

In this embodiment, permanent magnets fixed on the yoke 501 with sleeves contacted to the inner periphery thereof are used as fixed magnetic poles 550. It is also acceptable that a field coil electrically generating a magnetic force may be used instead of the permanent magnets as fixed magnetic poles 550.

At an end part of the yoke 501 of the electric rotating machine 500 end frame 900 is fixed. On this end frame 900, a metal brush holder 920 is provided. On the inside of the metal brush holder 920 a metal brush 910 is provided slidably movable in the axial direction. The metal brush 910 is pressed against the upper coil arms 534 of the armature coils 530 by a spring 930 housed within the metal brush holder 920.

Fig. 12 typically illustrates the winding of the armature coil 530. Illustrated in this figure is the case where the metal brush 910 is disposed on the outer coil arms 534.

In the electric rotating machine according to the present invention, the outer coil arms 534 of the outer coil bars 531 and the inner coil arms 537 of the inner coil bars 532 are disposed so as to be roughly parallel to each other on the axial end faces of the armature core 520 only through the insulating rings 590 and the insulating spacers 560 with metal brush 910 being disposed on the outer coil arms 534. In this arrangement, the overall length of the armature can significantly be shortened. Also in this arrangement, as a commutator which has conventionally been required separately from the armature coil, can be dispensed with, thus allowing the manufacturing procedure for the armature to be shortened and simplified.

Furthermore, as the projections 534c of the outer coil arms 534 are fit in the holes 561 of the insulating spacer 560, the displacement of the outer coil arms 534 towards the outer periphery is regulated, and the amount of the protrusions of the outer coil arms 534 from the end faces of the armature core 520 is small. In addition, as extension portions 538 of the outer coil trunks 532 and extension portions 539 of the inner coil trunks 533 are strongly pressed against and fixed to the axial side of the armature core 520 by the fixing members 570, the resistance to centrifugal force can be remarkably increased. Moreover, as extension portions 539 of the inner coil arms 537 are fit into recessed parts 562 of the insulating spacer 560, the displacement of the inner coil arms 537 in the radial direction towards the outer periphery can be prevented. As a result, the armature of this embodiment can withstand more than two times as high a rotation speed as conventional structures.

Furthermore, the heat generated at the outer coil arms 534 with which the metal brush 910 contacts is also transmitted relatively easily to the armature core 520 through the insulating spacers 560, the inner coil arms 537 and the insulating rings 590, and then discharged. In this arrangement, the rise in the temperature of the metal brush 910 and the contact face thereof can also be reduced. This rise in the temperature can further be reduced by using high heat-conduction ceramic or the alternative for the insulating spacers 560 and the insulating caps 580.

In addition to the above, according to the present invention as illustrated in Fig. 8, the outer coil arms 534 are arranged spirally and between mutually adjacent outer coil arms 534 clearance grooves 535 are formed, roughly corresponding to the thickness of the coil arms, which ranges from about 1.5 mm to about 3.5 mm. The clearance grooves 535 at the side of the outer coil arms 534 with which the metal brush 910 contacts are shaped protruding against the rotational direction of the armature core 520, whereby the clearance grooves 535 function as centrifugal fans by the rotation of the armature. That is, airflow is generated from the inner periphery of the outer coil arms 534 to the outer periphery thereof. This airflow has a velocity of approximately 4 m/s at or around the outer periphery of the outer coil arms 534 when the armature rotates at 8,000 rpm, exerting a cooling effect on the outer coil arms 534 and the metal brush 910.

Furthermore, by lap winding the armature coil 530, the clearance grooves 535 at the side not contacting the metal brush 910, i.e. on the side of the reduction gear 511, are also shaped so as to protrude against the rotational direction of the armature core 520. As a result, the clearance grooves 535 can also function as centrifugal fans, whereby the outer coil arms 534 at this side can also be cooled in the same way.

Moreover, by making a through hole in a part of the yoke 501 of the motor 500, electrical current leaks between the coils, due to powder worn off the metal brush 910 caused when the motor 500 is downsized, can be prevented by the above-described function as centrifugal fans. That is, the powder is completely discharged to the outside from the through hole of the yoke 501.

As the clearance grooves 535 are inevitably formed by inserting the armature coils 530 into the slots 524 of the armature core 520, there is no need to form clearance grooves 535 by machining or any other means, whereby the manufacturing costs can be remarkably reduced. In addition, as the thickness of the clearance groove 535 can be set to the thickness of the outer coil arm 534, the clearance grooves 535 can be used sufficiently longer, even if the sliding surface of the metal brush 910 is worn.

Furthermore, by using a metal for the metal brush holder 920, the heat generated on the metal brush 910 can be dissipated through the metal brush holder 920.

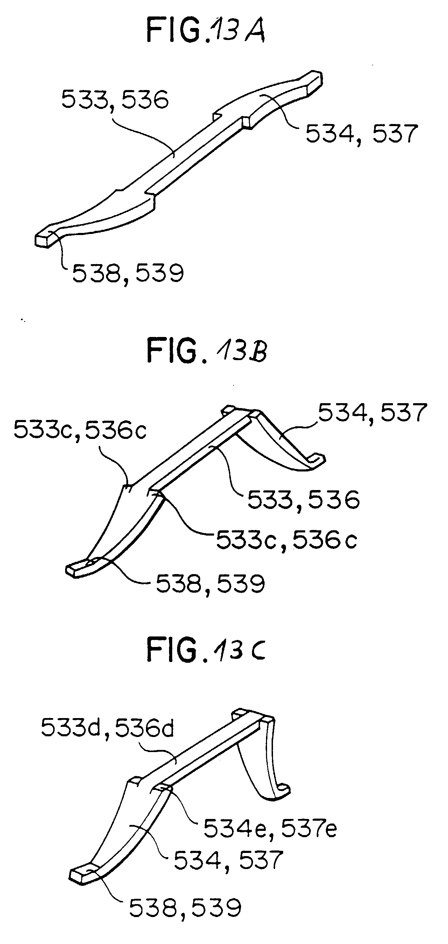

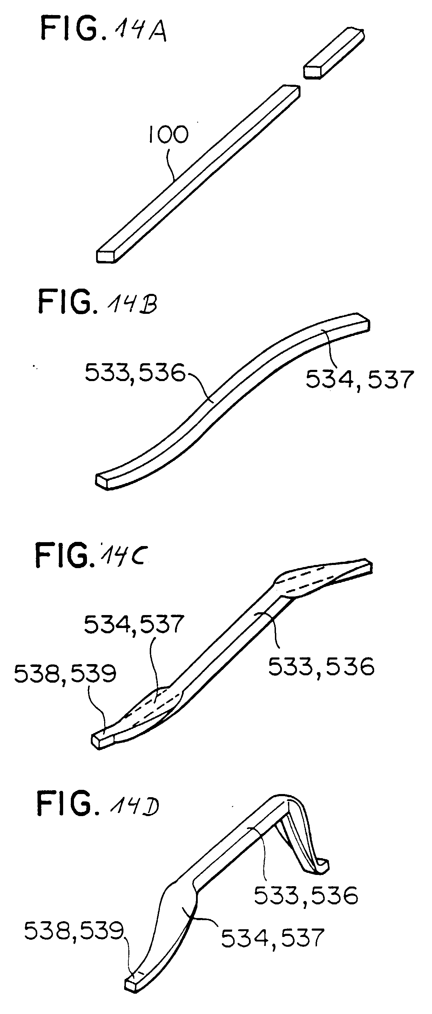

Figs. 13 and 14 illustrate some methods for producing the armature coil, particularly methods for producing the coil trunks 533 and 536 and the coil arms 534 and 537 so as to form performed coil units.

According to these embodiments, the outer coil trunk 533 and the inner coil trunk 536 are produced integrally with the outer coil arm 534 and the inner coil arm 537, respectively, as shown in Figs. 13 and 14. Both embodiments adopt a production method by means of press machining which is advantageous in terms of production cost.

In the embodiment illustrated in Figs. 13A through 13C, first, a bar-like shaped outer coil trunk 533 and an inner coil trunk 536, a trapezoidal-shaped outer coil arm 534 and an inner coil arm 537, and an upper inner extension portion 538 and a lower inner extension portion 539 are integrally stamped out of a plate material as illustrated in Fig. 13A. Here, the thickness is uniform throughout the stamped portions. Second, as illustrated in Fig. 13B, the outer coil arm 534 and the inner coil arm 537 are bent to the specified angle at the boundary portions between the coil trunks 533 and 536 and the trapezoidal coil arms 534 and 537, respectively. In this case, two cuts 533c and 536c are provided with the distance thereof approximating the width of the coil trunks 533 and 536. Third, as illustrated in Fig. 13C, the coil arms 534 and 537 are bent at roughly right angles to coil trunks 533 and 536, and then the upper inner extension portion 538 and the lower inner extension portion 539 are bent so as to be parallel to the coil trunks 533 and 536. In this arrangement, shoulders 534e and 537e of the coil arms 534 and 537 respectively are roughly at the same level as top surfaces 533d and 536b of the coil trunks 533 and 536, respectively. Accordingly, the coil arms 534 and 537 up to the vicinity of top surfaces 533d and 536d of the coil trunks can be used as the contact face for the metal brush 910, whereby the commutator area can widely and effectively be obtained, and the current density of the commutator surface can be reduced.

In the embodiment illustrated in Figs. 14A through 14D, first, a wire material 100 made of a good conductor, such as copper, is cut to the specified length as shown in Fig. 14A. Second, as illustrated in Fig. 14B, the portions corresponding to coil arms 534 and 537 are bent to the specified angles in the longitudinal direction. Third, as illustrated in Fig. 14C, coil arms 534 and 537 are shaped into a wide trapezoid, and an upper inner extension portion 538 and a lower inner extension portion 539 are shaped into narrow protrusions, respectively. The coil arms 534 and 537 are pressed to spread the side portions in the width direction to be wider near the coil trunks 533 and 536 and narrower near the extension portions. The extension portions 538 and 539 are drawn in the longitudinal direction to be narrow. Last, as illustrated in Fig. 14D, the coil arms 534 and 537 are bent at right angles to coil trunks 533 and 536 respectively, and the extension portions 538 and 539 are also bent at right angles to coil arms 534 and 537 respectively. This completes the whole procedure. Here, as the coil arms 534 and 537 are formed to be thinner towards the coil trunks 533 and 536, the stress caused by bending does not reach there, whereby the commutator face can be as widely and effectively obtained as in the embodiment illustrated in Fig. 13. In addition, as the coil arms 534 and 537 are formed by press machining to be wide, the coil arms 534 and 537 are hard enough to be used as they are as contact faces for the metal brush 910. Further, there is no need to widen the portions of the upper coil arms 534 and the lower coil arms 537 that do not contact the metal brush 910 as illustrated in Fig. 14D. Also, it is advisable that the outer coil trunk 533 and the outer coil arm 534 be made of a good conductor with Vickers hardness of 55 or more. The Vickers hardness of copper that is normally 50 can be raised to be 55 or more by press machining.

Furthermore, as illustrated in Fig. 15, by using the shear droop side (i.e., the side with no flash) made by press machining as the face of the outer coil arm 534 which is to be contacted by the metal brush 910, the edge portions of the outer coil arm 534 are rounded, whereby the slidability of the metal brush 910 is improved.

Figs. 16 through 18 illustrate other embodiments of the connection between the outer coil arm 534 and the inner coil arm 537.

In Fig. 16, the upper inner extension portion 538 is not formed at one end of the outer coil arm 534, and the lower inner extension portion 539 of the inner coil arm 537 is extended at most to the surface of the outer coil arm 534. Accordingly, the upper inner extension portion 538 of the outer coil arm 534 can be eliminated, whereby the processing cost of the outer coil bar 531 can be reduced.

As illustrated in Fig. 17 it is also acceptable that the lower inner extension portion 539 of the inner coil arm 537 be shorter than that of the type illustrated in Fig. 16 and connected to a part of the end face of the outer coil arm 534. As an effect of this arrangement, the lower inner extension portion 539 can easily be joined to the outer coil arm 534.

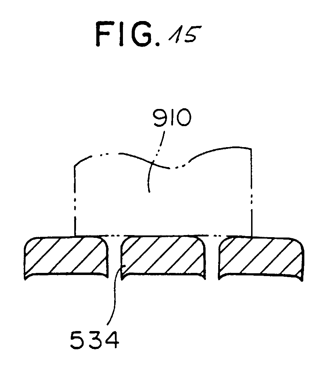

As illustrated in Fig. 18, it is also acceptable that short inner extension portions 538 and 539 extend from the outer coil arm 534 and the inner coil arm 537, respectively, and join to each other. In this arrangement, as the extension portions 538 and 539 can be short, the processing thereof is easy.

By using a liquid resin or a thin adhesive sheet for the insulating spacer 560 and the insulating ring 590, the small clearances between the outer coil arm 534 and the inner coil arm 537 and between the inner coil arm 537 and the armature core 520 can be eliminated. As a result, the heat conductivity can further be improved, and any micromotion of the coil arms 534 and 537 can be prevented.

Furthermore, by applying an insulating coating to the outer and inner coil trunks 533 and 536 and coil arms 534 and 537, the insulating films 540 and 541 can be eliminated. As a result, parts otherwise required, such as the insulating spacer 560, are not needed.

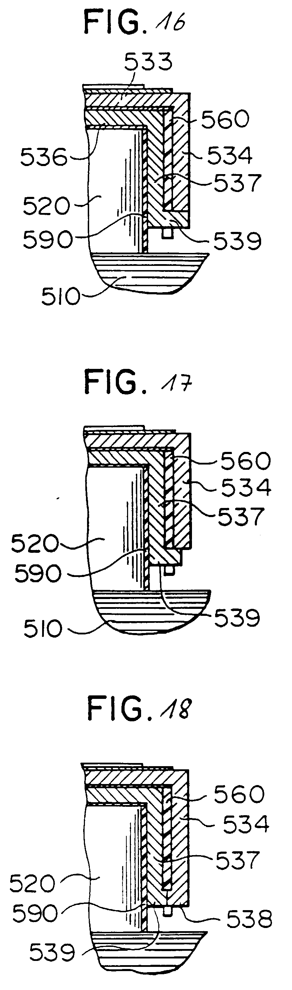

A second embodiment of the present invention is depicted in Fig. 19. In the second embodiment, open slots are adopted as slots 524 of the armature core 520. After armature coils 530 are fit in the slots 524, thin non-magnetic cylinder 600 is mounted on the outer periphery of the armature core 520 to prevent the projection of the armature coils 530 in the radial direction. In this arrangement, the outer periphery of the armature core 520 is so smooth that the windage loss during the rotation of the armature can be reduced and the wind noise can be reduced, resulting in a low-noise operation. Accordingly, this embodiment is suitable for use as a high speed electric rotating machine.

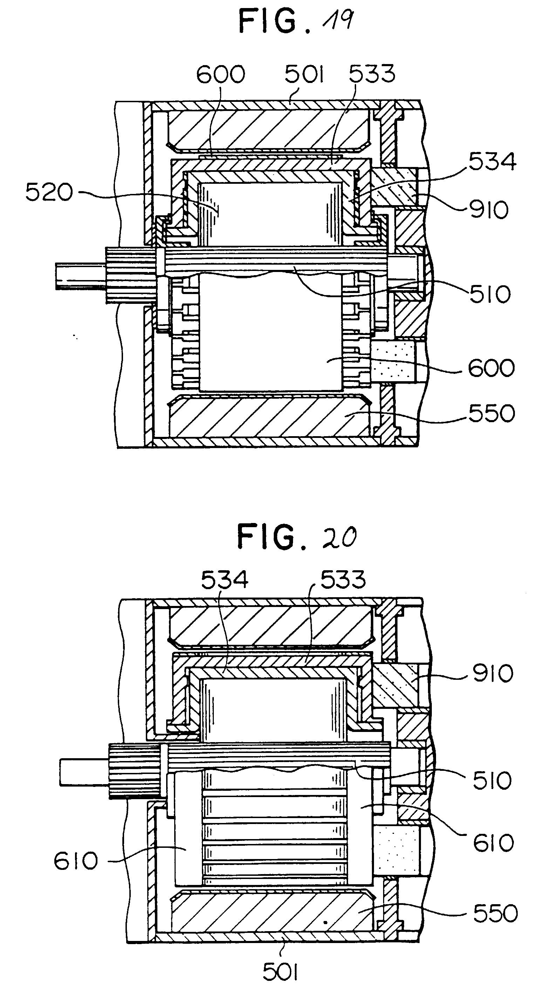

A third embodiment of the present invention is depicted in Fig. 20. In the third embodiment, both axial end sides of the outer coil trunk 533, i.e., the outer peripheral portions axially apart from the armature core 520, are blocked by thin non-magnetic cylinders 610. In this arrangement, fixing members 570 as used in the first embodiment are unnecessary. Accordingly, a larger area towards the inner periphery can be used as the sliding surface for the metal brush 910, and the metal brush 910 can have a larger cross sectional area. As a result, the electric rotating machine can have a higher output and a longer service life.

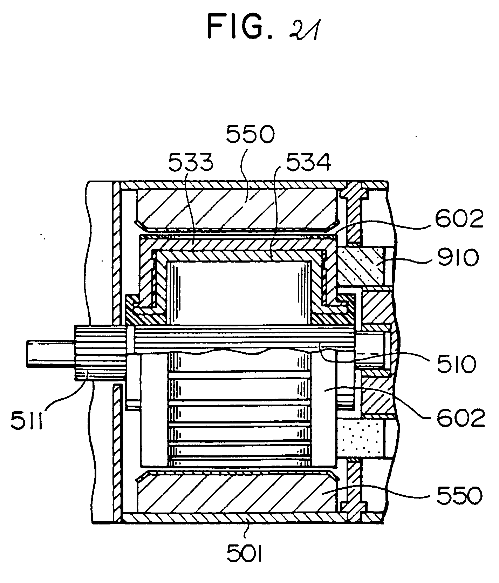

A fourth embodiment of the present invention is shown in Fig. 21. In the fourth embodiment all the components including the armature core 520 and the outer coil trunk 533 are integrally molded with molded resin 602.

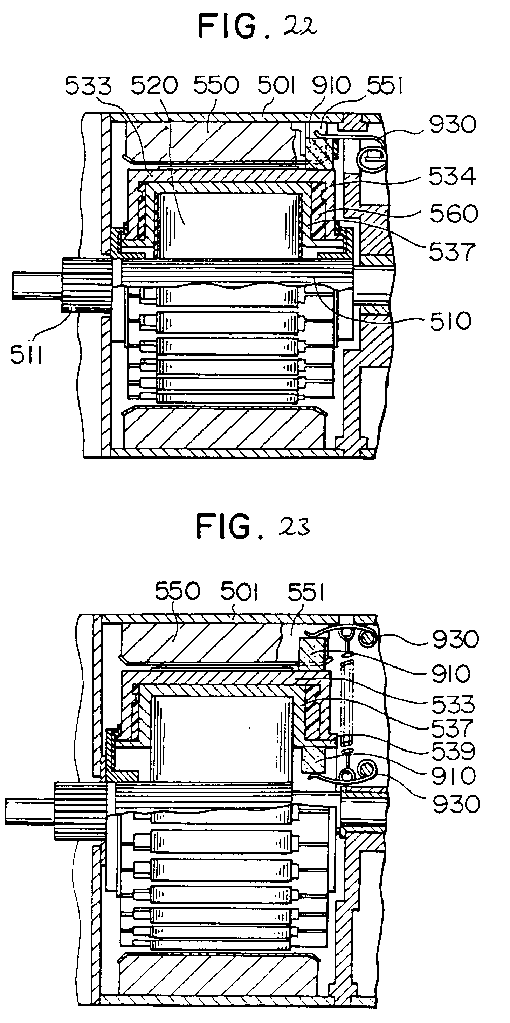

In a fifth embodiment illustrated in Fig. 22, the outer coil trunk 533 extends in the axial direction by the thickness of the metal brush 910 to slidably hold the metal brush 910 on the outer periphery of the end part of the outer coil trunk 533. A leaf spring is used as metal brush spring 930. In extending the outer coil trunk 533 in the axial direction, an insulating spacer 560 having a large thickness is used.

In addition, by forming spaces 551 between fixed magnets 550 and by disposing the metal brush 910 in these spaces 551, the space for housing the metal brush 910 can be secured, and at the same time, the overall axial length of the electric rotating machine can further be shortened.

In a sixth embodiment illustrated in Fig. 23, the metal brush 910 at one side is disposed on the outer periphery of the end part of the outer coil trunks 533 as in the fifth embodiment, and a further metal brush 910 at the other side is disposed so as to slide on the inner periphery of the lower inner extension portion 539 of the inner coil arm 537. These metal brushes 910 at both sides are forced against the coil trunk 533 and the extension portion 539, respectively, by the spring forces of the leaf springs 930. In this arrangement, the inner peripheral space of the lower inner extension portion 539 of the inner coil arm 537 is utilized for housing the metal brush 910 on the other side, whereby the overall axial length of the electric rotating machine can further be shortened.

In the sixth embodiment, it is also acceptable that the outer coil arm 534 be provided with an extension portion protruding towards the inner coil arm 537 instead of the lower extension portion 539 of the lower coil arm 537, with the metal brush 910 sliding on the extension portion from the outer coil arm 534 rather than on the lower extension portion 539.

It is to be noted that, in the first six embodiments, the description of the outer coil arm 534 and the inner coil arm 537 being roughly parallel to the end face of the armature core 520 means that the angle formed between the outer and inner coil arms 534 and 537 and the end face of the armature core 520 is 45 degrees at most.

In addition, in the embodiments of the electric rotating machine according to the present invention, two coil trucks are housed within each slot 524. It is also acceptable that any even number of coils, such as four coils, are used.

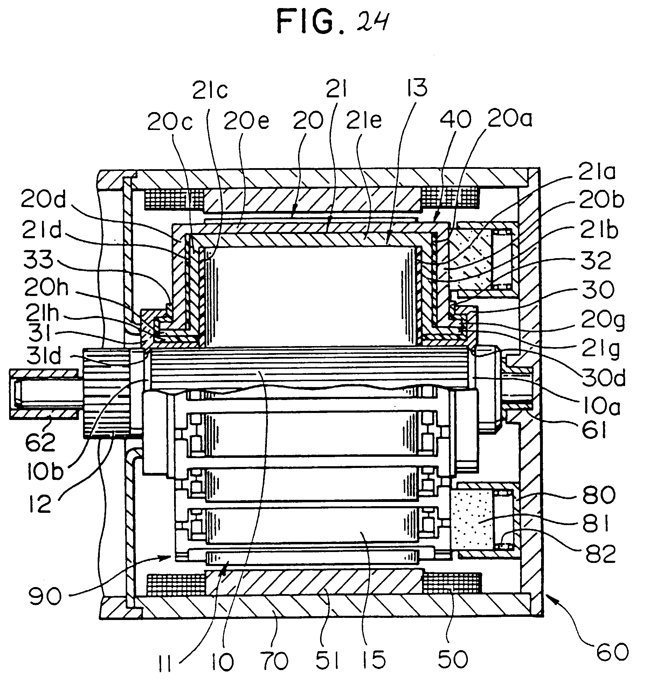

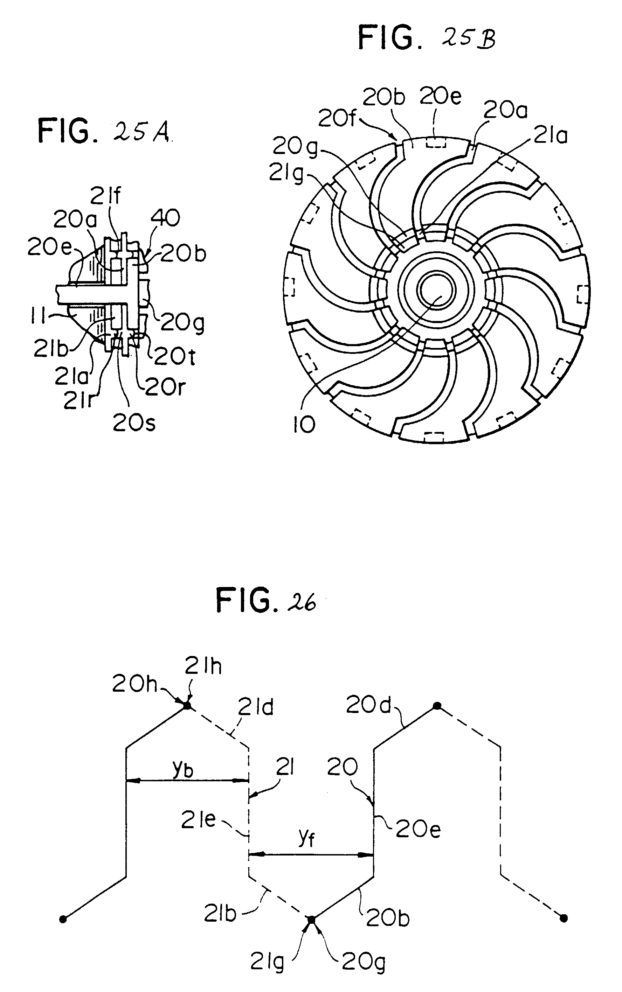

Fig. 24 shows the axial cross-sectional view of the electric rotary machine according to a seventh embodiment of this invention. Fig. 25A and 25B are enlarged cross sections in the axial direction of the commutator portion.

In the approximate center of the rotary shaft 10, the armature core 11 formed by layering multiple disc-shaped steel plates 15 is fit. Multiple slots 13 extending axially are formed on the circumference of the armature core 11, and armature coils 20e and 21e, also called conductors, are fit in the outer and inner layers. Numeral 20e is a trunk of the outer or upper conductor 20, and 21e is a trunk of the inner or lower conductor 21.

The commutator portion 40, which is made up by the outer conductor 20, is formed on the axial rear (right) end of the armature core 11. On the front (left) end, the non-commutator portion 90, described later, is formed, thus configuring the armature (rotor) of the electric rotating machine. Both axial ends of the rotary shaft 10 are supported by a bearing 61 installed on the end frame 60 of the electric rotating machine and by a bearing 62 installed on members not shown in the drawing. The end frame 60 blocks the opening of the yoke 70 made of cylindrical steel plates. In the inner circumference of the yoke 70, four magnetic cores 51 onto which field coils 50 are wound are fixed near the periphery of the armature core 11. Each of these coils is fixed so that they are separated 90 in the circumferential direction. The yokes 70, field coils 50 and magnetic cores 51 constitute a stator. Gears 12 are installed on the rotary shaft 10. These gears are engaged with the gears of a reduction gear mechanism (such as the epicycle reduction gear mechanism) not shown in the figure. The rotation of the rotary shaft 10 is conveyed to the gears not shown in the figure.

A brush holder 80 is fixed onto the end frame 60, and a brush 81 is held inside so that it can freely slide in the axial direction. The brush 81 is pressed against a first armature coil holding portion or upper arm 20b of a commutator portion 40, described later, by a spring 82 in the brush holder 80.

The commutator portion 40, a non-commutator portion 90, the armature coil 20e and the armature coil 21e are explained in detail hereinunder.

A third armature coil holding portion or lower arm 21b is arranged on the right side end of the armature core 11 with insulation material 21a. The first armature coil holding portion 20b is arranged on the surface with insulation material 20a. A fourth armature coil holding portion or lower arm 21d is arranged on the right side end of the armature core 11 with insulation material 21c. A second armature coil holding portion or upper arm 20d is arranged on the surface with insulation material 20c. The insulation material 21a, the third armature coil holding portion 21b, the insulation material 20a and the first armature coil holding portion 20b constitute the commutator portion (brush side) 40. The insulation material 21c, the fourth armature coil holding portion 21d, the insulation material 20c and the second armature coil holding portion 20d constitute the non-commutator portion (opposing brush side) 90.

The conductor 20e, the first armature coil holding portion 20b and the second armature coil holding portion 20d are made of copper, etc., and are integrally formed with cold casting, etc., to create the outer conductor 20. Furthermore, the conductor 21e, the third armature coil holding portion 21b, and the fourth armature coil holding portion 21d are made of copper, etc., and are integrally formed with cold casting, etc., to create the inner conductor 21.

The arrangement of the armature coil holding portions 20b and 21b on the commutator side is shown in Figs. 25a and 25B.

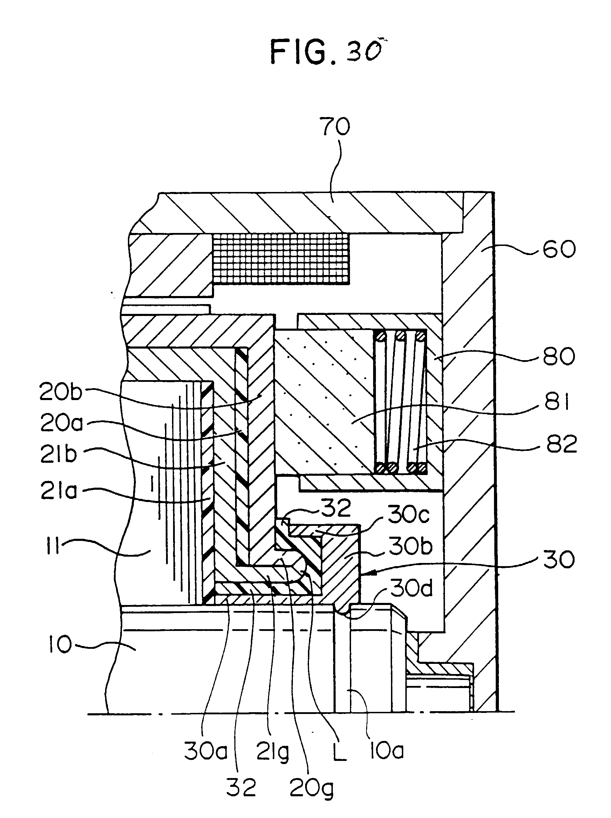

The insulation materials 20a and 21a are sandwiched between the armature coil holding portions 20b and 21b and between the armature coil holding portion 21b and the armature core 11. The insulation materials 20a and 21a have holding plate separator wall portions 20r, 20s and 21r that protrude to the commutator plate (armature coil holding portion) 20b that neighbors circumferentially, the curvy long-slot clearance or groove 20f between tow holding portions 20b, and to the holding plate (armature coil holding portion) 21b, and the curvy long-slot clearance 21f. The protrusion amount of the holding plate separator wall portion 20r is less than the shaft-wise direction thickness of the armature coil holding portion 20b. When the space or groove 20f is seen from the armature radial direction (refer to Fig. 28A), a space 20t is formed at the end of the holding plate separator wall portion 20r, and that the space 20t is an undercut of the commutator.

The armature coil holding portions 20d and 21d and the insulation materials 20c and 21c on the non-commutator side have the same type of form and arrangement as the armature coil holding portion 20b and 21b and the insulation materials 20a and 21a on the commutator side. The space on the non-commutator portion that corresponds to space 20t acts as a fan that generates a centrifugal wind during rotation of the armature.

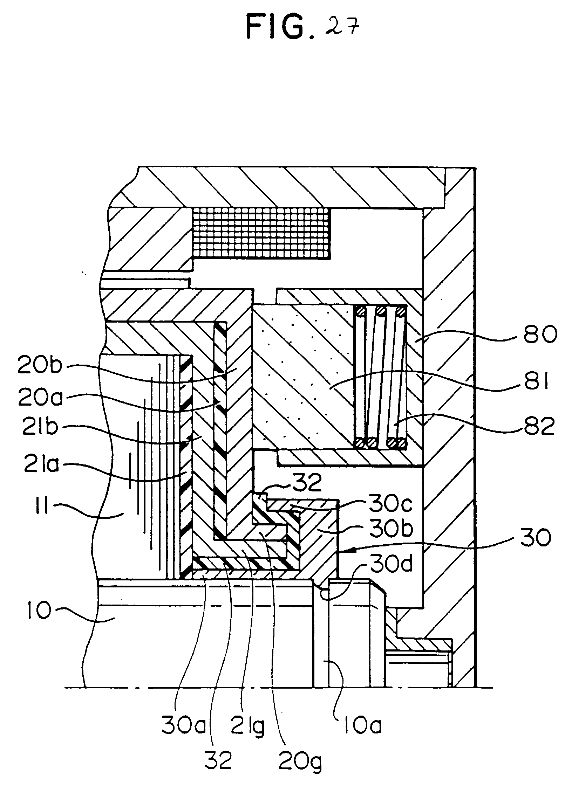

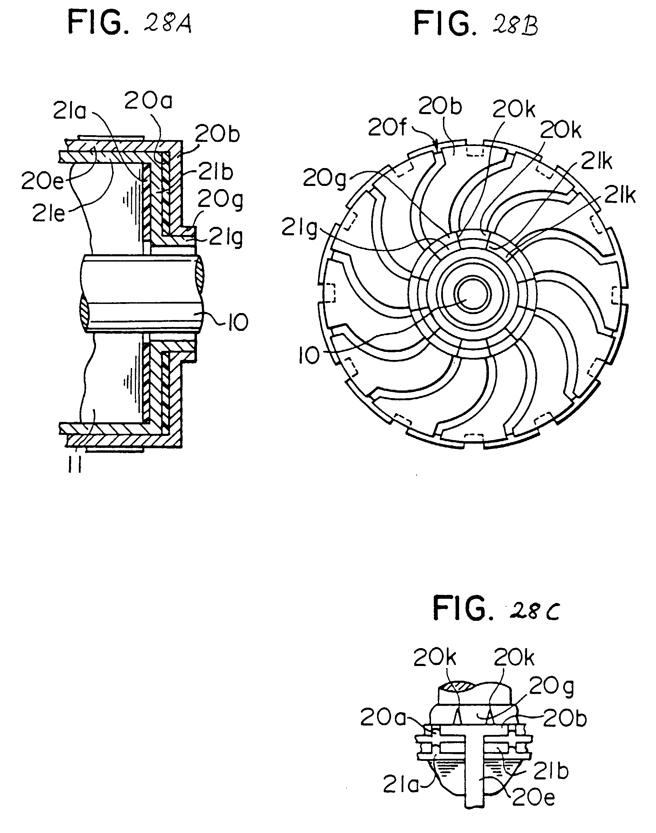

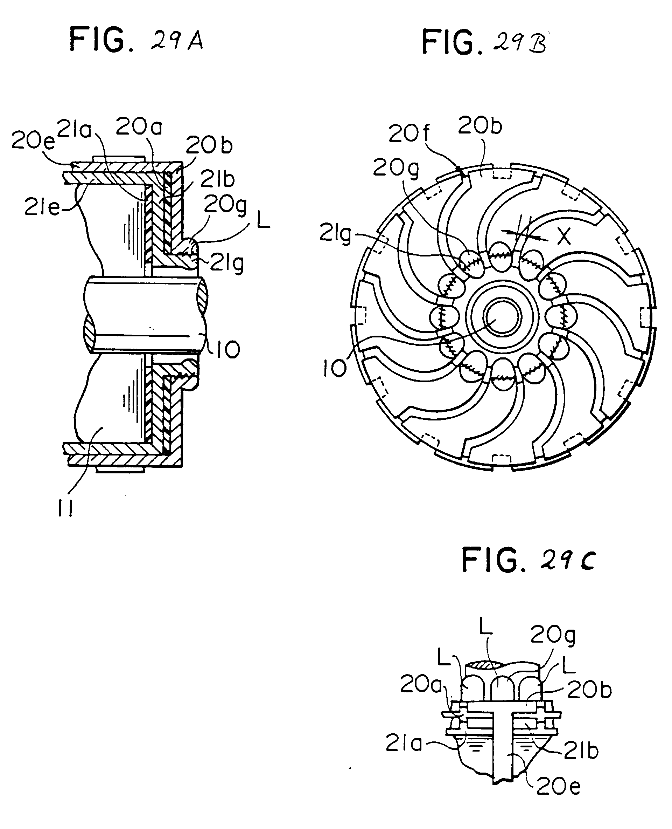

Furthermore, as shown in Figs. 24 and 27, protrusions 20g, 21g, 20h and 21h that protrude in the direction opposite from the armature core 11 are set on the inside diameter ends of the armature coil holding portions 20b, 21b, 20d and 21d. In other words, the protrusion 20g protrudes in the axial direction from the holding portion 20b, protrusion 21g from holding portion 21b, protrusion 20h from holding portion 20d, and protrusion 21h from holding portion 21d. The collar 30 fixed on the rotary shaft 10 directly contacts the circumference of protrusion portion 20g via insulation material 32. In the same manner, the collar 31 fixed on the rotary shaft 10 directly contacts the outer circumference of the protrusion portion 20h via the insulation material 33.

Next, a method of assembling the armature coil in this embodiment is explained.

Insulation film or insulation material sheet is sprayed, baked, wound, or stuck with adhesive onto the surface of the conductor 20e beforehand. Insulation film or insulation material sheet is also applied on the surface of the conductor 21e by the same method as for conductor 20e.

First conductor 21e and then conductor 20e are inserted into the slot 13 of the armature core 11. At this time, armature core's right side plain washer type insulation material 20a, armature coil holding portion 20b, insulation material 21a and armature coil holding portion 21e are arranged as explained above. When both conductors 20e and 21e have been inserted into all slots 13, both protrusion portions 20g and 21g are connected by welding, etc., and then both protrusion portions 20h and 21h are connected by welding, etc.

After connecting, pressure to press-in and compress the outer armature coil holding portions 20b and 20d towards the axial direction of each armature is applied. The insulation materials 20a, 20c, 21a and 21c are deformed. The protruding portions, the holding plate separator wall portions 20r, 20s and 21 shown in Fig. 25, are formed into the narrow clearances created when the insulation materials 20a, 20c, 21a and 21c neighbor circumferentially toward the commutator side and non-commutator side. If the insulation materials 21a and 21c are formed to protrude into the slot 13 of part of the armature core 11 at this time, the conductor and core insulation will be further rigid.

Thus, electrical insulation resin material that deforms under adequate compression pressure is most suitable for the insulation materials 21a and 21c.

At the same time, the collars 30 and 31 and the insulation materials 32 and 33 are fit from the left and right onto the rotary shaft 10 shown in Fig. 24. The Collar 30 and the protrusions 20g and 21g are assembled to directly contact via insulation material 32, and the collar 31 and the protrusions 20h and 21h are assembled to directly contact via insulation material 33. The Collars 30 and 31 deform in plasticity due to this fitting force, and resin 30d protrudes to the ring groove 10a so as to restrict any displacement of the collars 30 and 31.

If collars 31 and 32 are pressed and compressed toward the armature core axial side after assembly, the holding portions 20b, 21b, 20d and 21d of both conductors 20 and 21 will be rigidly pressed against the core 11, and insulation materials 20a, 21a, 20c and 21c will also be rigidly fixed. With the pressing and compressing of the collars 30 and 31, the protrusion 30d and 31d corresponding to the ring grooves 10a and 10b on the circumference of the rotary axis will be rigidly fixed to the inside diameter of the collars 31 and 33, and the fixing of the raised and formed collars 30 and 31 to the rotary shaft 10 will also be rigid. If the end of the inner cylinder of the collars 30 and 31 are directly contacted against core 11, the core 11 can be fixed onto the rotary shaft via the collars 30 and 31.

The circumference of the axial protrusions 20g and 20h of the outer conductor 20 fits with each collar 30 and 31 as explained above when the collars 30 and 31 have been assembled so that the rising of the conductors 20 and 21 in the radial direction due to a centrifugal force during rotation of the armature can be prevented.

An electrical connection diagram for an embodiment of the armature coils (conductors) 20e and 21e and the armature coil holding portions 20b, 21b, 20d and 21d in this invention is shown in Fig. 26.

As is clear with the above explanation, with this embodiment, it is assumed that the coil ends of the armature coil are converted into the third armature coil holding portion 21b of the inner conductor 21, so that the axial length of the armature can be reduced, and the motor size and weight can be reduced. Furthermore, as the centrifugal force is applied in the parallel direction onto the contact boundary surface of the resin insulation materials 21a and 20a, the third armature coil holding portion 21b and the first armature coil holding portion 20b, the anti-centrifugal force properties of the commutator portion 40 can be improved. Furthermore, an increase in the sliding surface area with the brush 81 has been realized. The resistance heat and frictional heat generated at the first armature coil holding portion 20d are favorably cooled by the centrifugal wind flow thus generated. The heat is also absorbed by the large heat capacity armature core 11 with solid heat transfer, allowing this structure to be applied to motors for fully-closed starter/motors. The effect is especially remarkable for reducing the size and increasing the rotation speed with the incorporation of the reduction gear mechanism.

In addition, according to this embodiment, all parts excluding the rotary shaft 10 can be produced with high productivity pressing and cold casting. The only machining required for the entire armature is pressing and welding. This is an area that conventionally required a large amount of machining time. Cutting required conventionally for forming the undercut between the commutator parts has been eliminated in this embodiment, as the undercut portion is formed when the armature coil 20 is assembled to the armature core 11. Bothersome conventional commutator mold formation is substituted for in this embodiment as the armature coil holding portions 20b and 20d are pressed in toward the armature core 11, and the insulation materials 20a and 20c arranged in the inner side of holding portions 20b and 20d are partially raised into the narrow clearances 20f between the armature coil holding portions 20b that neighbor circumferentially, and into the narrow clearances between armature coil holding portions 20d that neighbor circumferentially.

With the conventional armature, the armature coil had to be fit into the armature core slots, requiring processes such as impregnating the slots with resin. However, with this embodiment, the armature coil can be rigidly fit to the armature core with a very simple process by fitting the protrusion portions 20g, 21g, 20h and 21h on the armature coils 20 and 21 with the collars 30 and 31. Thus, the conventional resin impregnation can be omitted.

The insulation materials 20a, 21a, 20c and 21c are formed with an insulation matter having an adequate plasticity such as paper or resin sheets, etc. Insulation matter such as solid epoxy resin is used for the insulation materials 20a, 21a, 20c and 21c. After assembling the conductor and forming the protrusion portions 20r, 20s and 21r, etc., the material can be hardened by heating, etc. Furthermore, after the conductor is assembled, the expansion portions 20r, 20s and 21r of the insulation materials 20a, 21a, 20c and 21c are formed by pressing into the armature coil holding portions 20b, 21b, 20d and 21d in the above embodiment. However, the expansion portions 20r, 20s and 21r can be each formed for insulation materials 20a, 21a, 20c and 21c beforehand. In this case, a resin material with an outstanding insulation property and strength such as phenol resin can be used for the insulation materials 20a, 21a, 20c and 21c.

In the eighth embodiment, the other connection structure of the protrusion portions 20g and 21g of the first armature coil holding portion 20b and the third armature coil holding portion 21b is modified from the seventh embodiment.

Figs. 28A through 28C show the state before the protrusion portions 20g and 21g of the first armature coil holding portion 20b and the third armature coil holding portion 21b are connected.

The circumferentially widened portion 20k is formed on the axial end of the protrusion portion 20g. The circumferentially widened portion 21k is also formed on the axial end of the protrusion portion 21g.

In this embodiment, an armature coil 20e integrated with the first armature coil holding portion 20b of the slot 13 on the armature core 11 is inserted into the outside diameter portion of the first armature coil holding portion 20b and positioned circumferentially. At the inside diameter portion, the circumferentially widened portions 20k of the axial end of the protrusion portion 20g integrated with the armature coil holding portion 20b are positioned circumferentially so that they are mutually neighboring and contacting circumferentially. As a result, each first armature coil holding portion 20b is arranged uniformly in the circumferential direction.

Furthermore, the armature coil 21e integrated with the third armature coil holding portion 21b of the slot 13 on the armature core 11 is inserted into the outside diameter portion of the third armature coil holding portion 21b and positioned circumferentially. At the inside diameter portion, the circumferentially widened portions 21k of the axial end of the protrusion portion 21g integrated with the armature coil holding portion 21b are positioned circumferentially so that they are mutually neighboring and contacting circumferentially. As a result, each third armature coil holding portion 21b is arranged uniformly in the circumferential direction.

The widths of the protrusion portion 20g axial end circumferentially widened portion 20k and the protrusion portion 21g axial end circumferentially widened portion 21k is arranged so that the circumferential width center is approximately aligned.

The arrangement state before the protrusion portions 20h and 21h in the second armature coil holding portion 20d and fourth armature coil holding portion 21d is the same as that explained above.

Fig. 29 shows the state with the protrusions 20g and 21g of the first armature coil holding portion 20b and the third armature coil holding portion 21b being welded.

When the circumferentially widened portions 20k and 21k that are the axial ends of the protrusion portions 20g and 21g are melted with TIG welding, etc., the melted end changes into a near-spherical shape due to its own surface tension. The radial dimensions increase and the width dimensions in the circumferential direction decrease. In other words, the shape changes from the original circumferentially widened portions 20k and 21k in which the circumferential direction was wider than the radial direction into a spherical shape. The shape hardens to create the spherical contact portion L.

Thus, since the circumferentially widened portions 20k and 21k of the protrusion 20g and 21g have been shaped into the spherical contact portion L, the circumferential width of the circumferentially widened portions 20k and 21k have decreased. Thus, the circumferential clearance x is accurately created between each protrusion portion 20g and 21g that neighbors circumferentially.

In other words, while the first armature coil holding portion 20b and the third armature coil holding portion 21b contact, a clearance is accurately created circumferentially between the neighboring first armature coil holding portions 21b and the neighboring third armature coil holding portions 21b.

On the end of the armature core 11 that is opposite from that above, a spherical contact portion is formed with welding for melting the circumference winding portion of protrusions 20h and 21h as with the third armature coil holding portion, and thus the same effect can be achieved.

The narrow clearances 20f formed between the first armature coil holding portions 20b that neighbor circumferentially due to the above connections become an undercut for the commutator.

In this embodiment, the protrusion portions 20g and 21g gradually widen circumferentially toward the axial opposing armature core as shown in Fig. 28C. Only each end on the axial opposing armature core contact each other. In other words, the circumference widened portions 20k and 21k are formed almost only at the end of the protrusion portions 20g and 21g. Thus, when this portion is heated and melted, the protrusion portions 20g and 21g including each circumferentially widened portion 20k and 21k each become independent spherical contact portions, and the protrusion portions 20g and 21g that neighbor circumferentially are not integrally welded. Every other protrusion portion 20g and 21g in the circumferential direction can be welded at once, and then the remaining protrusion portions 20g and 21g can be welded at once.

Next, the collars 30 and 31 will be explained with reference to Fig. 30.

The collar 30 fixed onto the rotary shaft 10 directly contacts the spherical contact portion L of the protrusion portion 20g via the insulation material 32. In the same manner, the collar 31 fixed to the rotary shaft 10 directly contacts the outer circumference of the protrusion portion 20h via the insulation material 33.

The Collar 30 is a commutator fixing material made of soft metal such as aluminum. As shown in Fig. 30, the collar 30 is configured of the inner cylinder portion 30a fit onto the rotary shaft 10, the ring plate portion 30b that extends toward the outer radial direction from the base end portion of the inner cylinder portion 30a, and the outer cylinder portion 30c that extends from the ring plate portion 30b outside diameter end to the armature core 11. The expansion portion 30d that fits into the ring groove 10a on the rotary shaft 10 is formed on the inside diameter end of the ring plate portion 30b. The Collar 31 has the same structure as the collar 30.

In this eighth embodiment, the outer conductor 20 and the inner conductor 21 are engaged with the collar fit on the spherical contact portion, thereby improving the anti-centrifugal force properties of the outer conductor 20 and the inner conductor 21.

In addition, with conventional armatures, copper wires had to be wound into a designated shape, the coil ends had to be twisted, and the coil had to be connected to a designated position in the commutator while curving the coil. Instead of this complicated commutator coil that required accuracy, a simple work process in which the outer conductor 20 and the inner conductor 21 have been integrally formed, and these are inserted into slots from the outside diameter side of the armature core 11, has been incorporated. In this insertion process, the armature coils 20e and 21e are automatically positioned circumferentially at the outside diameter portion of the conductors 20 and 21. At the inside diameter portion of the conductors 20 and 21, when the protrusion portions 20g, 20h, 21g and 21h are assembled to the neighboring phases, they are automatically positioned circumferentially when directly contacted. The direct contact of each circumferentially widened portion 20k and 21k of these protrusions 20g, 20h, 21g and 21h allows the circumferential width to be reduced and the circumferential clearance to be automatically formed when welded.

The conductors 20 and 21 are fixed in the diameter and axial directions by the collars 30 and 31, so that the armature coil does not need to be fixed to the armature core as with the conventional armature. Thus, the armature coil fixing process in which resin is impregnated into slots 13 is not longer required. However, this process can be added.

In addition to TIG welding, arc welding or laser beam welding can be used. The spherical contact portion L or the protrusion portions 20g, 21g, 20h and 21h can be deformed with an external force before or after welding each armature coil holding portions 20b, 21b, 20d and 21d. If the strength and insulation properties of the armature coil insulation film are sufficient, part or all of the insulation materials 20a, 21a, 20c and 21c can be eliminated.

## Claims

1. Electric rotating machine, comprising
an armature core (520, 11) including a plurality of recesses (524, 13) and a shaft (510, 10) rotatably supporting said armature core (520, 11), wherein
each of said recesses (524, 13) houses an outer coil trunk (533, 20e) and an inner coil trunk (536, 21e);
each of said inner coil trunks (536, 21e), on both end parts thereof, comprises an inner coil arm (537, 21b, 21d) which is disposed substantially perpendicularly to said shaft (510, 10) so as to extend towards said shaft; and
each of said outer coil trunks (533, 20e), on both end parts thereof, comprises an outer coil arm (534, 20b, 20d) which is disposed substantially perpendicularly to said shaft (510, 10) so as to extend towards said shaft and which is connected, at the other end part thereof, to the other end part of an inner coil arm (537, 21b, 21d) disposed in another one of said recesses (524, 13);
*characterized in that*
said recesses are slots (524, 13);
each inner coil trunk (536, 21e) is integrally preformed with its two inner coil arms (537, 21b, 21d) so as to form a preformed inner coil unit which is inserted into one of said slots (524, 13); and
each outer coil trunk (533, 20e) is integrally preformed with its two outer coil arms (534, 20b, 20d) so as to form a preformed outer coil unit which is inserted into one of said slots (524, 13), upon the inner coil unit.

2. Electric rotating machine according to claim 1, *characterized in that* said inner and outer coil units are integrally preformed from a single piece material.

3. Electric rotating machine according to claim 1 or 2, *characterized in that* said inner and/or said outer coil units are made of a good conductor with a Vickers hardness of 55 or more.

4. Electric rotating machine according to one of claims 1 through 3, *characterized by* a brush (910, 81) which is disposed slidably on an axial outer surface of said outer coil arms (534, 20b, 20d) or on a radial outer surface of said outer coil trunks (533, 20e).

5. Electric rotating machine according to one of claims 1 through 4, *characterized in that* said inner coil arms (537, 21b, 21d) have an axially protruding portion (539, 219) extending in close proximity along said shaft (510, 10) at a radial inner end part thereof to electrically connect said inner coil arms (537, 21b, 21d) to a corresponding radial inner end part of said outer coil arms (534, 20b, 20d).

6. Electric rotating machine according to claim 5, *characterized by* a brush (910, 81) which is disposed slidably on a radial inner surface of said axially protruding portion (539, 219) of said inner coil arms (537, 21b, 21d).

7. Electric rotating machine according to one of claims 1 through 6, *characterized by* a preventing means (570, 600, 602, 610, 30) for preventing any radial outward movement of said outer and inner coil arms.

8. Electric rotating machine according to claim 7, *characterized in that* said preventing means includes a collar (570, 30) which is adapted to press said upper coil arms (534, 20b, 20d) towards an axial side end of said armature core (520, 11).

9. Electric rotating machine according to claim 7, *characterized in that* said preventing means includes a cylindrical non-magnetic ring (602, 610) which is fitted on a radial outer periphery of said outer coil trunks (533, 20e) at a side of said outer coil arms (524, 20b, 20d).

10. Electric rotating machine according to one of claims 1 through 9, *characterized in that* the circumferential width of said outer coil arms (534, 20b) is circumferentially widened in the radial direction towards an outer periphery of said armature core (520, 11).

11. Electric rotating machine according to claim 10, *characterized in that* clearance grooves (535, 20f) are formed by adjacent two of said outer coil arms (534, 20b), said clearance grooves (535, 20f) being formed in a substantially spiral or radial shape extending in a direction opposite to a rotational direction of said armature core (520, 11) from a radially inner periphery to a radially outer periphery for providing an air flow path.

12. Electric rotating machine according to claim 11, *characterized in that* a depth of said clearance grooves (535, 20f) roughly matches a thickness of said outer coil arms (534, 20b).

13. Electric rotating machine according to one of claims 1 through 12, *characterized by* insulators (560, 590, 20a, 21a) being disposed between and in contact with said inner coil arms (537, 21b, 21d) and said armature core (520, 11) and between and in contact with said outer coil arms (534, 20b, 20d) and said inner coil arms (537, 21b, 21d), respectively.

14. Electric rotating machine according to claim 13, *characterized in that* that one insulator (560) which is disposed between said inner and outer coil arms (534, 537) is provided with positioning parts (561, 562) for regulating circumferential and radial relative displacement between said outer coil arms (534) and said inner coil arms (537).

15. Electric rotating machine according to claim 14, *characterized in that* said positioning parts (561, 562) comprise holes (561) provided in said insulator (560) for receiving therein protrusion portions (534c) formed on said outer coil arms (534).

16. Electric rotating machine according to one of claims 13 through 15, *characterized in that* radially inner end parts of said insulators (560, 590, 20a, 21a) are inserted between said axial protrusion portions (539, 219) and are circumferentially adjacent to each other and have axially inner recessed parts recessed for positioning.

17. Electric rotating machine according to one of claims 13 through 16, *characterized in that* said outer and inner coil arms (534, 537, 20b, 20d, 21b, 21d) and the respective insulators (560, 21a) which are disposed between said outer and inner coil arms are fixed to each other with a resin material.

18. Electric rotating machine according to one of claims 13 through 17, *characterized in that*
said insulators (590) electrically insulate said inner coil trunks (536) and said inner coil arms (537) from said armature core (520), said outer coil trunks (533) and said outer coil arms (534) being forced by molding; and
said outer coil trunks and outer coil arms and said inner coil trunks and said inner coil arms are fixed to said armature core by means of molding.

19. Electric rotating machine according to one of claims 1 through 8 or 10 through 18, *characterized by* a cylindrical body (600) fittingly mounted on an outer periphery of said armature core (520).

## Patentansprüche

1. Rotierende elektrische Maschine mit:
einem Ankerkern (520, 11) mit einer Mehrzahl von Vertiefungen (524, 13) und einer Welle (510, 10), die den Ankerkern (520, 11) drehbeweglich lagert, wobei
jede der Vertiefungen (524, 13) einen äußeren Spulenblock (533, 20e) und einen inneren Spulenblock (536, 21e) aufnimmt;
jeder der inneren Spulenblöcke (536, 21e) an beiden Endteilen hiervon einen inneren Spulenarm (537, 21b, 21d) aufweist, der im wesentlichen senkrecht zu der Welle (510, 10) angeordnet ist, um sich in Richtung der Welle zu erstrecken; und
jeder der äußeren Spulenblöcke (533, 20e) an beiden Endteilen hiervon einen äußeren Spulenarm (534, 20b, 20d) aufweist, der im wesentlichen senkrecht zu der Welle (510, 10) angeordnet ist, um sich in Richtung der Welle zu erstrecken und der an dem anderen Endteil hiervon mit dem anderen Endteil des inneren Spulenarms (537, 21b, 21d) verbunden ist, der in einer anderen der Vertiefungen (124, 13) angeordnet ist,
dadurch gekennzeichnt, daß
die Vertiefungen Schlitze (524, 13) sind;
jeder innere Spulenblock (536, 21e) einstückig mit den zwei inneren Spulenarmen (537, 21b, 21d) vorgeformt ist, um eine vorgeformte innere Spuleneinheit zu bilden, die in einen der Schlitze (524, 13) eingesetzt wird; und
jeder äußere Spulenblock (533, 20e) einstückig mit den beiden äußeren Spulenarmen (534, 20b, 20d) vorgeformt ist, um eine vorgeformte äußere Spuleneinheit zu bilden, die in einen der Schlitze (524, 13) oberhalb der inneren Spuleneinheit eingesetzt wird.

2. Rotierende elektrische Maschine nach Anspruch 1, dadurch gekennzeichnet, daß die inneren und äußeren Spuleneinheiten einstückig aus einem einzigen Stück Material vorgeformt sind.

3. Rotierende elektrische Maschine nach Anspruch 1 oder 2, dadurch gekennzeichnet, daß die inneren und/oder äußeren Spuleneinheiten aus einem guten Leiter mit einer Vickers-Härte von 55 oder mehr gefertigt sind.

4. Rotierende elektrische Maschine nach einem der Ansprüche 1 bis 3, gekennzeichnet durch eine Bürste (910, 81), die gleitbeweglich an einer axial äußeren Oberfläche der äußeren Spulenarme (534, 20b, 20c) oder einer radialen äußeren Oberfläche der äußeren Spulenblöcke (533, 20e) angeordnet ist.

5. Rotierende elektrische Maschine nach einem der Ansprüche 1 bis 4, dadurch gekennzeichnet, daß die inneren Spulenarme (537, 21b, 21d) einen axial vorstehenden Bereich (539, 219) haben, der sich in enger Nähe entlang der Welle (510, 10) an einem radial inneren Endteil hiervon erstreckt, um die inneren Spulenarme (537, 21b, 21d) mit einem entsprechenden radialen inneren Endteil der äußeren Spulenarme (534, 20b, 20d) elektrisch zu verbinden.

6. Rotierende elektrische Maschine nach Anspruch 5, gekennzeichnet durch eine Bürste (910, 81), die gleitbeweglich auf einer radial inneren Oberfläche des axial vorstehenden Bereiches (539, 219) der inneren Spulenarme (537, 21b, 21d) angeordnet ist.

7. Rotierende elektrische Maschine nach einem der Ansprüche 1 bis 6, gekennzeichnet durch eine Verhinderungsvorrichtung (570, 600, 602, 610, 30) zur Verhinderung jeglicher nach außen gerichteter Bewegung der äußeren und inneren Spulenarme.

8. Rotierende elektrische Maschine nach Anspruch 7, dadurch gekennzeichnet, daß die Verhinderungsvorrichtung einen Kragen (570, 30) beinhaltet, der dafür ausgelegt ist, die oberen Spulenarme (534, 20b, 20d) in Richtung eines axialen Seitenendes des Ankerkerns (520, 11) zu pressen.

9. Rotierende elektrische Maschine nach Anspruch 7, dadurch gekennzeichnet, daß die Verhinderungsvorrichtung einen zylindrischen nichtmagnetischen Ring (602, 610) beinhaltet, der auf einem radial äußeren Umfang der äußeren Spulenblöcke (533, 20e) auf einer Seite der äußeren Spulenarme (524, 20b, 20d) aufgesetzt ist.

10. Rotierende elektrische Maschine nach einem der Ansprüche 1 bis 9, dadurch gekennzeichnet, daß die umfangsseitige Breite der äußeren Spulenarme (534, 20b) in Radialrichtung auf einen äußeren Umfang des Ankerkerns (520, 11) zu umfangsseitig erweitert ist.

11. Rotierende elektrische Maschine nach Anspruch 10, dadurch gekennzeichnet, daß Freihalte-Kerben (534, 20f) durch zwei benachbarte äußere Spulenarme (534, 20b) gebildet werden, wobei die Freihalte-Kerben (535, 20f) in einer im wesentlichen spiralförmigen oder radialen Form ausgebildet sind und sich von einem radial inneren Umfang zu einem radial äußeren Umfang zur Bereitstellung eines Luftströmungspfades in einer Richtung entgegengesetzt zur Drehrichtung des Ankerkerns (520, 11) erstrecken.

12. Rotierende elektrische Maschine nach Anspruch 11, dadurch gekennzeichnet, daß eine Tiefe der Freihalte-Kerben (535, 20f) in etwa an eine Dicke der äußeren Spulenarme (534, 20b) angepaßt ist.

13. Rotierende elektrische Maschine nach einem der Ansprüche 1 bis 12, gekennzeichnet durch Isolatoren (560, 590, 20a, 21a), die zwischen und in Kontakt mit den inneren Spulenarmen (537, 21b, 21d) und dem Ankerkern (520, 11) und zwischen und in Kontakt mit den äußeren Spulenarmen (534, 20b, 20d) und den inneren Spulenarmen (537, 21b, 21d) angeordnet sind.

14. Rotierende elektrische Maschine nach Anspruch 13, dadurch gekennzeichnet, daß ein Isolator (560), der zwischen den inneren und äußeren Spulenarmen (534, 537) angeordnet ist, mit Positionierteilen (561, 562) versehen ist, um eine relative Versetzung in Umfangsrichtung und Radialrichtung zwischen den äußeren Spulenarmen (534) und den inneren Spulenarmen (537) zu regulieren.

15. Rotierende elektrische Maschine nach Anspruch 14, dadurch gekennzeichnet, daß die Positionierteile (561, 562) Löcher (561) in dem Isolator (560) aufweisen zur Aufnahme vorspringender Abschnitte (534c), die an den äußeren Spulenarmen (534) ausgeformt sind.

16. Rotierende elektrische Maschine nach einem der Ansprüche 13 bis 15, dadurch gekennzeichnet, daß radial innere Endteile der Isolatoren (560, 590, 20a, 21a) zwischen die axialen vorspringenden Abschnitte (539, 219) eingesetzt sind, umfangsseitig einander benachbart sind und axial innere vertiefte Teile haben, die für eine Positionierung vertieft sind.

17. Rotierende elektrische Maschine nach einem der Ansprüche 13 bis 16, dadurch gekennzeichnet, daß die äußeren und inneren Spulenarme (534, 537, 20b, 20d, 21b, 21d) und die jeweiligen Isolatoren (560, 21a), die zwischen den äußeren und inneren Spulenarmen angeordnet sind, untereinander mit einem Kunstharzmaterial verbunden sind.

18. Rotierende elektrische Maschine nach einem der Ansprüche 13 bis 17, dadurch gekennzeichnet, daß
die Isolatoren (590) die inneren Spulenblöcke (536) und die inneren Spulenarme (537) elektrisch von dem Ankerkern (520) isolieren, wobei die äußeren Spulenkerne (533) und die äußeren Spulenarme (534) gegossen sind; und
die äußeren Spulenblöcke und die äußeren Spulenarme und die inneren Spulenblöcke und die inneren Spulenarme durch eine Gußvorgang mit dem Ankerkern befestigt sind.

19. Rotierende elektrische Maschine nach einem der Ansprüche 1 bis 8 und 10 bis 18, gekennzeichnet durch einen zylindrischen Körper (600), der fest auf einen äußeren Umfang des Ankerkerns (520) gesetzt ist.

## Revendications

1. Machine électrique rotative, comportant
une armature centrale (520, 11) comportant une pluralité de renfoncements (524, 13) et un arbre (510, 10) supportant en rotation ladite armature centrale (520, 11), dans laquelle
chacun desdits renfoncements (524, 13) loge un boîtier de rouleau extérieur (533, 20e) et un boîtier de rouleau intérieur (536, 21e);
chacun desdits boîtiers de rouleau intérieur (536, 21e), sur les deux parties d'extrémité, comporte un bras de rouleau intérieur (537, 21b, 21d) qui est disposé substantiellement perpendiculairement audit arbre (510, 10) de manière à s'étendre vers ledit arbre; et
chacun desdits boîtiers de rouleau extérieur (533, 20e), sur les deux parties d'extrémités, comporte un bras de rouleau extérieur (534, 20b, 20d) qui est disposé substantiellement perpendiculairement audit arbre (510, 10) de manière à s'étendre vers ledit arbre et qui est connecté, à l'autre partie d'extrémité, à l'autre partie d'extrémité d'un bras de rouleau intérieur (537, 21b, 21d) disposé dans un autre desdits renfoncements (524, 13);
caractérisé en ce que
lesdits renfoncements sont des créneaux (524, 13);
chacun des boîtiers de rouleau intérieur (536, 21e) est intégralement préformé avec ses deux bras de rouleau intérieur (537, 21b, 21d) de manière à former une unité de rouleau intérieur préformée qui est insérée dans l'un desdits créneaux (524, 13) et
chaque boîtier de rouleau extérieur (533, 21e) est intégralement préformé avec ses deux bras de rouleau extérieur (534, 20b, 20d) de manière à former une unité de rouleau extérieur préformée qui est insérée dans l'un desdits créneaux (524, 13), sur l'unité de rouleau intérieur.

2. Machine électrique rotative selon la revendication 1, caractérisé en ce que lesdites unités de rouleau intérieur et extérieur sont intégralement préformées à partir d'un matériau d'une seule pièce.

3. Machine électrique rotative selon la revendication 1 ou 2, caractérisé en ce que lesdites unités de rouleau intérieur et/ou extérieur sont faites d'un bon conducteur avec une dureté Vickers de 55 ou plus.

4. Machine électrique rotative selon l'une des revendications 1 à 3, caractérisée en ce qu'un balai (910, 81) qui est disposé en glissement sur une surface extérieure axiale desdits bras de rouleau extérieur (534, 20b, 20d) ou sur une surface extérieure radiale desdits boîtiers de rouleau extérieur (533, 20e).

5. Machine électrique rotative selon l'une des revendications 1 à 4, caractérisée en ce que lesdits bras de rouleau intérieur (537, 21b, 21d) comportent une partie axialement en saillie (539, 219) s'étendant près et le long dudit arbre (510, 10) à une partie d'extrémité intérieure radiale pour connecter électriquement lesdits bras de rouleau intérieur (537, 21b, 21d) à une partie d'extrémité intérieure radiale correspondante desdits bras de rouleau extérieur (534, 20b, 20d).

6. Machine électrique rotative selon la revendication 5, caractérisée en ce qu'un balai (910, 81) qui est disposé en glissement sur une surface intérieure radiale de ladite partie axialement en saillie (539, 219) desdits bras de rouleau intérieur (537, 21b, 21d).

7. Machine électrique rotative selon l'une des revendications 1 à 6, caractérisée en ce qu'un moyen d'empêchement (570, 600, 602, 610, 30) pour empêcher tout mouvement extérieur radial desdits bras de rouleau extérieur et intérieur.

8. Machine électrique rotative selon la revendication 7, caractérisée en ce que ledit moyen d'empêchement comporte un collier (570, 30) qui est adapté pour presser lesdits arbres de rouleau supérieur (534, 20b, 20d) vers une extrémité de côté axial de ladite armature centrale (520, 11).

9. Machine électrique rotative selon la revendication 7, caractérisé en ce que ledit moyen d'empêchement comporte un anneau non-magnétique cylindrique (602, 610) qui est ajusté sur une périphérie extérieure radiale desdits boîtiers de rouleau extérieur (533, 20e) à un côté desdits bras de rouleau extérieur (524, 20b, 20d).

10. Machine électrique rotative selon l'une des revendications 1 à 9, caractérisée en ce que la largeur circonférentielle desdits bras de rouleau extérieur (534, 20b) est étendue de manière circonférentielle dans la direction radiale vers une périphérie extérieure de ladite armature centrale (520, 11).

11. Machine électrique rotative selon la revendication 10, caractérisée en ce que des rainures de tolérance (535, 20f) sont formées par deux desdits bras de rouleau extérieur adjacents (534, 20b), lesdites rainures de tolérance (535, 20f) étant de forme substantiellement en spirale ou radiale s'étendant dans une direction opposée à une direction rotationnelle de ladite armature centrale (520, 11) à partir d'une périphérie intérieure radialement vers une périphérie extérieure radialement pour fournir un passage de flux d'air.

12. Machine électrique rotative selon la revendication 11, caractérisée en ce qu'une profondeur desdites rainures de tolérance (535, 20f) correspond grossièrement à une épaisseur desdits bras de rouleau extérieur (534, 20b).

13. Machine électrique rotative selon l'une des revendications 1 à 12, caractérisée en ce que des isolateurs (560, 590, 20a, 21a) étant disposés entre, et en contact avec, lesdits bras de rouleau intérieur (537, 21b, 21d) et ladite armature centrale (520, 11), et entre, et en contact avec, lesdits bras de rouleau extérieure (534, 20b, 20d) et lesdits bras de rouleau intérieur (537, 21b, 21d), respectivement.

14. Machine électrique rotative selon la revendication 13, caractérisée en ce que l'un des isolateurs (560) qui est disposé entre lesdits bras de rouleau intérieur et extérieur (534, 537) est fourni avec des parties de positionnement (561, 562) pour la régulation du déplacement radial et circonférentiel relatif entre lesdits bras de rouleau extérieur (534) et lesdits bras de rouleau intérieur (537).

15. Machine électrique rotative selon la revendication 14, caractérisée en ce que lesdites parties de positionnement (561, 562) comportent des orifices (561) prévus dans ledit isolateur (560) pour y recevoir les parties en saillie (534c) formées sur lesdits bras de rouleau extérieur (534).

16. Machine électrique rotative selon l'une des revendications 13 à 15, caractérisée en ce que des parties d'extrémité intérieure radialement desdits isolateurs (560, 590, 21a, 21a) sont insérées entre lesdites parties en saillie axiale (539, 219) et sont adjacentes circonférentiellement les unes aux autres et comportent des parties encastrées intérieures encastrées axialement pour le positionnement.

17. Machine électrique rotative selon l'une des revendications 13 à 16, caractérisée en ce que lesdits bras de rouleau extérieur et intérieur (534, 537, 20b, 21b, 21d) et les isolateurs respectifs (560, 21a) qui sont disposés entre lesdits bras de rouleau extérieur et intérieur sont fixés les uns aux autres avec un matériau de résine.

18. Machine électrique rotative selon l'une des revendications 13 à 17, caractérisée en ce que
lesdits isolateurs (590) isolent électriquement lesdits boîtiers de rouleau intérieur (536) et lesdits bras de rouleau intérieur (537) de ladite armature centrale (520), lesdits boîtiers de rouleau extérieur (533) et lesdits bras de rouleau extérieur (534) étant forcés par moulage; et
lesdits boîtiers de rouleau extérieur et lesdits bras de rouleau extérieur ainsi que lesdits boîtiers de rouleau intérieur et lesdits bras de rouleau intérieur sont fixés à ladite armature centrale au moyen de moulage.

19. Machine électrique rotative selon l'une des revendications 1 à 8 ou 10 à 18, caractérisée par un corps cylindrique (600) monté de manière ajustée sur une périphérie extérieure de ladite armature centrale (520).
